# EUROPEAN PATENT SPECIFICATION

(11) **EP 1 870 436 B1**
(45) Date of publication and mention of the grant of the patent: **12.03.2014**
(21) Application number: 05787758.1
(22) Date of filing: 28.09.2005
(51) Int. Cl.: C08L 77/00, C08K 13/02, C08L 71/12, C08K 3/18, C08K 3/32, C08K 5/51, C08L 77/02, C08L 77/06

(54) **POLYAMIDE-POLYPHENYLENE ETHER RESIN COMPOSITION**
POLYAMID-POLYPHENYLENETHER-HARZZUSAMMENSETZUNG
COMPOSITION D UNE RESINE DE POLYAMIDE-POLYETHER DE PHENYLENE

(30) Priority: 13.04.2005 JP 2005116041
(43) Date of publication of application: 26.12.2007
(73) Proprietor: Asahi Kasei Chemicals Corporation, Tokyo 101-8101 (JP)
(72) Inventor: TERADA, Kazunori, Chiba 2990261 (JP); NODA, Kazuya, Chiba 2990261 (JP)
(74) Representative: Strehl Schübel-Hopf & Partner
(86) International application number: PCT/JP2005/017787
(87) International publication number: WO 2006/112058

(56) References cited:
- EP-A2- 0 601 546
- DE-A1- 3 831 992
- JP-A- 9 124 930
- JP-A- 2004 043 812
- JP-A- 2004 107 488
- JP-A- 2004 256 827
- JP-A- 2005 281 616
- JP-A- 2005 298 546
- JP-B2- 2 741 795

## Description

### Technical Field

The present invention relates to a resin composition comprising polyamide and polyphenylene ether, particularly to a resin composition which shows only a small change in flowability during molding even when the resin composition has a water content variable over a wide range, and to a molded article obtained from the same. Further, the present invention relates to a resin composition which has significantly improved retention stability during molding and provides a molding having significantly improved heat stability, in particular, coating adhesion after heat exposure, and to a molding of the resin composition.

### Background Art

Polyphenylene ether is used in a wide range of applications because it is excellent in mechanical properties, electrical properties, heat resistance, and dimensional stability. Polyphenylene ether is poor in moldability when it is used singly, and a technique to mix polyamide has been proposed in order to improve the moldability. As a result, polyphenylene ether has currently become a material which can be used for a wide variety of applications.

Recently, applications of a polyamide-polyphenylene ether alloy have rapidly developed to exterior parts (such as fenders, door panels, etc.) of automobiles and the like, and with the upsizing and complication of automobile exterior parts, the alloy has been often molded at high temperatures and at the upper limit of the capability of molding machines. In particular, in the molding of large moldings such as automobile fenders, retention stability during molding is indispensable for ensuring quality of the appearance of moldings. Specifically, poor retention stability during molding causes poor appearance of moldings, leading to reduction in coating adhesion and sharpness of the appearance after coating. In order to improve the retention stability, there are disclosed: a technique (Patent Document 1) in which a polyamide-polyphenylene ether alloy is mixed with an acetal and a polyphosphate; a technique (Patent Document 2) in which a polyamide-polyphenylene ether alloy is mixed with an organic phosphorus stabilizer and zinc oxide and/or zinc sulfide; and a technique (Patent Document 3) in which a polyamide-polyphenylene ether alloy is mixed with a phosphorus heat stabilizer.

Furthermore, there are disclosed a production method in which a primary condensate of polyamide is alloyed with a polyphenylene ether while undergoing polymerization reaction so that relative viscosity of the primary condensate increases, and a composition obtained by the method (Patent Documents 4 and 5). These documents describe that sodium hypophosphite is effective to enhance the polymerization degree of polyamide and effective for the improvement of the color of the composition.

Generally, when a polyamide-polyphenylene ether alloy is molded, water content needs to be reduced because a polymer containing a large amount of water has a problem of the formation of silver streaks. On the other hand, water content which is reduced more than necessary causes reduction in flowability, leading to a problem such as an occurrence of a molding failure in that a mold cannot be completely filled. Thus, it is essential to control water content within a specific range. However, even when water content was controlled within the specific range, the control of flowability was difficult when sodium hypophosphate, a polymerization catalyst of polyamide, was present in a typical amount because the viscosity of polyamide varied during molding due to the water content of the polymer.

Therefore, in order to ensure quality of the appearance of moldings and improve processing stability during molding, a resin composition has been desired which shows only a small change in flowability over a wide range of water content and is excellent in retention stability.

Further, in the applications requiring electrostatic coatability, it is important to ensure quality of the appearance of moldings in order to ensure coating adhesion and sharpness of the appearance after coating. In particular, in the case of some automobile fenders, after an online electrostatic coating, a resin molding is passed through a heat treatment step together with a metal panel in order to cure an anticorrosion coating applied to the metal panel. In such a heat treatment step, the resin molding is generally exposed to a temperature of about 170°C to 200°C or to a higher temperature for about 10 to 50 minutes. Therefore, under present circumstances, a resin molding to be used in the field of automobile fenders has been required to have improved heat stability, in particular, coating adhesion after heat exposure.

DE 3831992 A1 discloses a thermoplastic molding composition comprising a polyamide, a polyphenylene ether and a phosphorus containing compound.
Patent Document 1: Japanese Patent Laid-Open No. 8-73730
Patent Document 2: Japanese Patent Laid-Open No. 7-26134
Patent Document 3: Japanese Patent Laid-Open No. 7-41658
Patent Document 4: Japanese Patent Laid-Open No. 7-331063
Patent Document 5: Japanese Patent Laid-Open No. 7-166053

### Disclosure of the Invention

### Problems to be Solved by the Invention

It is an object of the present invention to provide a polyamide-polyphenylene ether alloy resin composition which is suitable for large moldings such as automobile exterior parts, and which shows only a small change in flowability over a wide range of water content and is excellent in retention stability in a molding machine, which has not been able to be achieved by the above-described techniques, and to provide a molding composed of the resin composition. It is another object of the present invention to provide a polyamide-polyphenylene ether alloy resin composition which provides a molding having improved appearance quality and significantly improved coating adhesion after heat exposure, and to provide a molding of the same. Means for Solving the Problems

### Summary of the Invention

The present inventors have made exhaustive studies with a view toward solving the above-mentioned problems. As a result, they have found that a resin composition excellent in the above-mentioned properties is a resin composition comprising a salt of a phosphorus compound selected from phosphoric acid, phosphorous acid and hypophosphorous acid with a Group 1 metal of the Periodic Table, wherein the resin composition contains 2 to 25 ppm of phosphorus element based on 100% by mass of the sum of a polyamide, a polyphenylene ether, an elastomer, and the salt of the phosphorus compound, and found that the resin composition is effective for obtaining the above-mentioned molding. The present invention has been completed on the basis of this finding.

The foregoing and other objects, features and advantages of the present invention will be apparent from the following detailed description and the claims.

### Detailed Description of the Invention

According to the present invention, there is provided a resin composition, characterized by comprising (A) a polyamide, (B) a polyphenylene ether, (C) an elastomer, and (D) one or more phosphorus compounds selected from a salt of a phosphorus compound selected from among phosphoric acid, phosphorous acid and hypophosphorous acid with a Group 1 metal of the Periodic Table, wherein the resin composition contains 2 to 25 ppm of phosphorus element based on 100% by mass of the sum of the components (A) to (D), and there is also provided a molding composed of the resin composition.

For an easier understanding of the present invention, the essential features and various preferred embodiments of the present invention are enumerated below.
1. A resin composition, characterized by comprising (A) a polyamide, (B) a polyphenylene ether, (C) an elastomer, and (D) one or more phosphorus compounds selected from a salt of a phosphorus compound selected from among phosphoric acid, phosphorous acid and hypophosphorous acid with a Group 1 metal of the Periodic Table, wherein the resin composition contains 2 to 25 ppm of phosphorus element based on 100% by mass of the sum of the components (A) to (D).
2. The resin composition according to claim 1, characterized in that the component (D) is preliminarily included in the component (A).
3. The resin composition according to claim 2, characterized in that the component (D) is added during polymerization of the component (A).
4. The resin composition according to any of claims 1 to 3, characterized in that the component (A) preliminarily includes the compound (D) and is a mixture of two or more polyamides having different concentrations of phosphorus element.
5. The resin composition according to claim 4, characterized in that the component (A) is a mixture of (A-1) a polyamide containing 35 ppm or more and 250 ppm or less of phosphorus element and (A-2) a polyamide containing 0 ppm or more and less than 35 ppm of phosphorus element.
6. The resin composition according to any of claims 1 to 5, characterized by further comprising (E1) a base of a Group IA element of the Periodic Table selected from among oxide, carbonate, alkoxide, bicarbonate, and hydroxide and/or (E2) a polyvalent metal compound selected from among a carboxylate of one or more metals selected from among Group IIA elements, zinc, and aluminum, and a water-soluble compound of one or more metals selected from among Group IIA elements, zinc, and aluminum.
7. The resin composition according to claim 6, characterized in that the base (E1) of a Group IA element of the Periodic Table is at least one compound selected from among sodium bicarbonate, potassium bicarbonate, potassium hydroxide, and sodium hydroxide.
8. The resin composition according to claim 6, characterized in that the polyvalent metal compound (E2) is a compound selected from among a carboxylate of one or more metals selected from among Group IIA elements, zinc, and aluminum, a halide of one or more metals selected from among Group IIA elements, zinc, and aluminum, and a nitrate of one or more metals selected from among Group IIA elements, zinc, and aluminum.
9. The resin composition according to any of claims 6 to 8, characterized by comprising a phosphorus compound (D) and a base (E1) of a Group IA element of the Periodic Table and/or a polyvalent metal compound (E2), wherein the ratio of the sum of the number of moles of polyvalent metal and the number of moles of monovalent metal to the number of moles of phosphorus (P) element, that is, the value of (the number of moles of polyvalent metal + the number of moles of monovalent metal)/(the number of moles of P) is more than 1 and 8 or less.
10. The resin composition according to any of claims 6 to 9, characterized in that the component (D) and the component (E1) and/or the component (E2) are preliminarily added to the component (A) before being mixed with other components.
11. The resin composition according to any of claims 1 to 5, characterized by further comprising (F) a soluble metal aluminate represented by the general formula (M₂O)_{X}(Al₂O₃)_{Y} (wherein X + Y = 1, and M is a Group 1 metal of the Periodic Table).
12. The resin composition according to claim 11, characterized in that the soluble metal aluminate (F) is a sodium aluminate represented by the general formula (Na₂O)_{X}(Al₂O₃)_{Y} (wherein X + Y = 1 and 0.35 ≤ Y/X ≤ 1.25).
13. The resin composition according to claim 11 or 12, characterized in that the resin composition has a molar ratio of Al metal to monovalent metal (the number of moles of Al metal/the number of moles of monovalent metal) of 0.10 to 1.0.
14. The resin composition according to any of claims 11 to 13, characterized in that the component (D) and the component (F) are preliminarily added to the component (A) before being mixed with other components.
15. The resin composition according to any of claims 1 to 14, characterized by further comprising an alkali metal halide compound and/or a copper compound.
16. The resin composition according to claim 15, characterized by containing from 1 to 100 ppm of copper element based on 100% by mass of the total amount of the resin composition.
17. The resin composition according to any of claims 1 to 16, characterized in that the polyamide (A) is an aliphatic polyamide.
18. The resin composition according to any of claims 1 to 16, characterized in that the polyphenylene ether (B) is poly(2,6-dimethyl-1,4-phenylene ether) and/or a copolymer of 2,6-dimethyl-1,4-phenol and 2,3,6-trimethyl-1,4-phenol.
19. The resin composition according to any of claims 1 to 18, characterized by further comprising a styrenic polymer (G).
20. The resin composition according to any of claims 1 to 19, characterized by further comprising an inorganic filler (H).
21. The resin composition according to claim 20, characterized in that the inorganic filler (H) is one or more selected from among glass fiber, talc, clay, wollastonite, and titanium oxide.
22. The resin composition according to any of claims 1 to 21, characterized in that the elastomer (C) is a hydrogenated derivative of a block copolymer comprising a polymer block composed mainly of an aromatic vinyl compound and a polymer block composed mainly of a conjugated diene compound.
23. The resin composition according to any of claims 1 to 22, characterized by further comprising an electrically conductive carbon filler (I), wherein the electrically conductive carbon filler is one or more selected from among carbon fibrils and carbon black.
24. An injection molding of the resin composition according to any of claims 1 to 23.

### Advantages of the Invention

The present invention can provide a polyamide-polyphenylene ether alloy resin composition which shows only a small change in MFR over a wide range of water content of the resin composition and is excellent in retention stability in a molding machine, and can provide a molding composed of the resin composition. If there is only a small change in MFR of the resin composition over a wide range of water content, it means that production efficiency of the resin composition and the moldings can be improved, and that defective filling in a mold during molding can be reduced, because strict control of the resin composition for water content during production or before molding can be simplified. The resin composition can provide a molding having good appearance in an extremely wide range of molding conditions because the resin composition has significantly improved retention stability. Further, the present invention can provide a polyamide-polyphenylene ether alloy resin composition which provides a molding having significantly improved coating adhesion after heat exposure, and to provide a molding of the same.

### Best Mode for Carrying Out the Invention

Each component which composes the resin composition of the present invention will be described in detail below.

As the type of polyamide which can be used in the present invention as a component (A), any polyamide can be used without particular limitation as long as it is a polyamide having an amide bond {-NH-C(=O)-} in the main chain repeating unit of the polymer.

Generally, a polyamide can be obtained by ring opening polymerization of lactams, condensation polymerization of diamine and dicarboxylic acid, and condensation polymerization of aminocarboxylic acid, but is not limited thereto.

The above described diamine includes an aliphatic, an alicyclic, and an aromatic diamine, and specifically includes tetramethylene diamine, hexamethylene diamine, undecamethylene diamine, dodecamethylene diamine, tridecamethylene diamine, 1,9-nonanediamine, 2-methyl-1,8-octanediamine, 2,2,4-trimethylhexamethylene diamine, 2,4,4-trimethylhexamethylene diamine, 5-methylnonamethylene diamine, 1,3-bisaminomethyl cyclohexane, 1,4-bisaminomethyl cyclohexane, m-phenylene diamine, p-phenylene diamine, m-xylylene diamine, and p-xylylene diamine.

The dicarboxylic acid includes an aliphatic, an alicyclic, and an aromatic dicarboxylic acid, and specifically includes adipic acid, suberic acid, azelaic acid, sebacic acid, dodecanoic diacid, 1,1,3-tridecanoic diacid, 1,3-cyclohexane dicarboxylic acid, terephthalic acid, isophthalic acid, naphthalene dicarboxylic acid, and dimmer acid.

The lactams specifically include ε-caprolactam, enanthlactam, and ω-laurolactam.

Further, the aminocarboxylic acid specifically includes ε-aminocaproic acid, 7-aminoheptanoic acid, 8-aminooctanoic acid, 9-aminononanoic acid, 11-aminoundecanoic acid, 12-aminododecanoic acid, and 13-aminotridecanoic.

In the present invention, any of polyamides and copolymer polyamides can be used, which is obtained by carrying out condensation polymerization singly of or in the form of a mixture of at least two sorts of the above lactams, diamines, dicarboxylic acids and ω-aminocarboxylic acids.

Moreover, polyamides obtained by polymerizing the above lactams, diamines, dicarboxylic acids and ω-aminocarboxylic acids in a polymerization reactor to a stage of an oligomer having a low molecular weight, and further polymerizing to a stage thereof having a high molecular weight in an extruder or the like, can suitably be used.

The method for polymerizing the polyamide resins used in the present invention is not particularly limited, and may include melt polymerization, interfacial polymerization, solution polymerization, bulk polymerization, solid phase polymerization and combinations thereof. Among others, melt polymerization is more preferably used.

The polyamide particularly usefully employed in the present invention includes a polyamide 6, a polyamide 6,6, a polyamide 4,6, a polyamide 11, a polyamide 12, a polyamide 6,10, a polyamide 6,12, a polyamide 6/6,6, a polyamide 6/6,12, a polyamide MXD(m-xylylene diamine),6, a polyamide 6,T, a polyamide 6,I, a polyamide 6/6,T, a polyamide 6/6,I, a polyamide 6,6/6,T, a polyamide 6,6/6,I, a polyamide 6/6,T/6,I, a polyamide 6,6/6,T/6,I, a polyamide 6/12/6,T, a polyamide 6,6/12/6,T, a polyamide 6/12/6,I, a polyamide 6,6/12/6,I, and a polyamide 9,T. Polyamides obtained by copolymerizing plural polyamides in an extruder can also be used.

A preferred polyamide is an aliphatic polyamide. A more preferred one is a polyamide 6, a polyamide 6,6, a polyamide 6/6,6, or a mixture thereof. A most preferred one is a polyamide 6, a polyamide 6,6, or a mixture thereof.

The polyamides which can be used in various resin compositions of the present invention preferably have a viscosity number as measured in 96% sulfuric acid according to ISO 307 in the range of from 90 to 160 ml/g, more preferably in the range of from 100 to 150 ml/g.

In the present invention, polyamides may be a mixture of plural types of polyamides. Examples of the mixture include a mixture of a polyamide having a viscosity number of 170 ml/g and a polyamide having a viscosity number of 80 ml/g and a mixture of a polyamide having a viscosity number of 120 ml/g and a polyamide having a viscosity number of 115 ml/g.

A particularly preferred form of mixture among polyamide mixtures is a mixture of polyamides each having a different viscosity number in the range of from 90 to 160 ml/g.

The viscosity number of the mixture can be determined by measuring in accordance with ISO 307 by dissolving the polyamides in 96% sulfuric acid, in the same mass ratio as in the mixture.

A polyamide generally has an amino group and a carboxyl group as terminal groups thereof. A preferred concentration ratio of amino groups/carboxyl groups in the present invention is 9/1 to 1/9, more preferably 8/2 to 1/9, further preferably 6/4 to 1/9.

Further, the concentration of terminal amino groups is preferably at least 1 × 10⁻⁵ mol/g or more, more preferably 1 × 10⁻⁵ mol/g or more and 4 × 10⁻⁵ mol/g or less.

The concentration of terminal carboxyl groups is preferably at least 5 × 10⁻⁵ mol/g or more, more preferably 7 × 10⁻⁵ mol/g or more and 13 × 10⁻⁵ mol/g or less.

As a method for adjusting terminal groups of these polyamide resins, a known method may be used. For instance, the method includes a method in which one or more selected from diamine compounds, monoamine compounds, dicarboxylic acid compounds, monocarboxylic acid compounds and the like are added so that a predetermined terminal-group concentration can be obtained on polymerization of the polyamide resins.

In addition to the above-described compounds, known additives and the like which can be added to polyamides may also be added in an amount of less than 10 parts by mass based on 100 parts by mass of the polyamides.

The polyphenylene ether which can be used as a component (B) in the present invention is a homopolymer and/or a copolymer composed of the structural unit represented by the following formula (1): 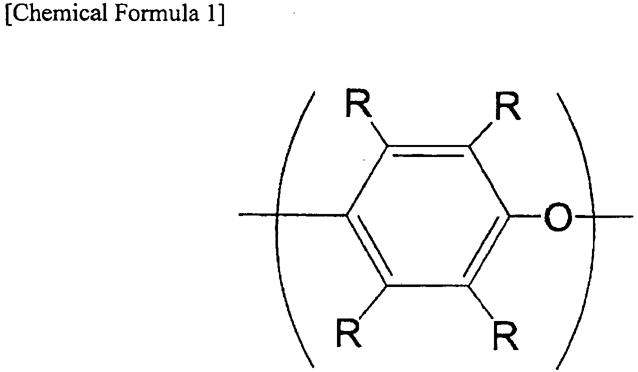 wherein O denotes an oxygen atom, and each R independently denotes hydrogen, halogen, a primary or secondary C1 to C7 alkyl group, a phenyl group, a C1 to C7 haloalkyl group, a C1 to C7 aminoalkyl group, a C1 to C7 hydrocarbonoxy group, or a halohydrocarbonoxy group, with a proviso that at least two carbon atoms are between a halogen atom and an oxygen atom.

Specific examples of the polyphenylene ether according to the present invention include poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether), and further include a polyphenylene ether copolymer such as a copolymer of 2,6-dimethylphenol with other phenols (for example, a copolymer with 2,3,6-trimethylphenol, and a copolymer with 2-methyl-6-butylphenol as described in Japanese Patent Publication No. 52-17880).

Among these, a particularly preferred polyphenylene ether is poly(2,6-dimethyl-1,4-phenylene ether), a copolymer of 2,6-dimethyl-1,4-phenol with 2,3,6-trimethyl-1,4-phenol, or a mixture thereof.

Further, when a copolymer of 2,6-dimethyl-1,4-phenol with 2,3,6-trimethyl-1,4-phenol is used, further preferred is a copolymer composed of about 80 to about 90% by mass of 2,6-dimethyl-1,4-phenol and about 10 to about 20% by mass of 2,3,6-trimethyl-1,4-phenol based on 100% by mass of the total polyphenylene ether copolymer as the ratio of each monomer units.

Any known method may be employed without particular limitation for producing polyphenylene ethers to be used in the present invention. For example, there can be mentioned production methods as described in U.S. Patent Nos. 3,306,874, 3,306,875, 3,257,357, and 3,257,358; Japanese Patent Laid-Open No. 50-51197, and Japanese Patent Publication Nos. 52-17880 and 63-152628.

Reduced viscosity (ηsp/c: 0.5 g/dl, in a solution of chloroform, measured at 30°C) of the polyphenylene ether which can be used in the present invention is preferably in the range of 0.15 to 0.70 dl/g, more preferably in the range of 0.20 to 0.60 dl/g, still more preferably in the range of 0.40 to 0.55 dl/g.

In the present invention, a blend of at least two types of polyphenylene ethers having different reduced viscosities may be used without any problem. For example, it includes a mixture of a polyphenylene ether having a reduced viscosity of not higher than 0.45 dl/g and a polyphenylene ether having a reduced viscosity of not lower than 0.50 dl/g, a mixture of a low molecular weight polyphenylene ether having a reduced viscosity of not higher than 0.40 dl/g and a polyphenylene ether having a reduced viscosity of not lower than 0.50 dl/g, but of course, it is not limited thereto.

Further, the polyphenylene ether which can be used in the present invention may be a totally modified polyphenylene ether or a mixture of an unmodified polyphenylene ether with a modified polyphenylene ether.

As used herein, the term "modified-polyphenylene ether" refers to a polyphenylene ether modified with at least one modifying compound which has in the molecular structure thereof at least one carbon-carbon double bond or triple bond, and has at least one carboxylic acid group, acid anhydride group, amino group, hydroxyl group, or glycidyl group.

A method for producing the modified polyphenylene ether includes (1) a method for reacting a polyphenylene ether with a modifying compound at a temperature in the range of from 100°C to lower than the glass transition temperature of the polyphenylene ether without melting the polyphenylene ether in the presence or absence of a radical initiator; (2) a method for reacting a polyphenylene ether with a modifying compound by melt-kneading at a temperature in the range of from the glass transition temperature of a polyphenylene ether to 360°C in the presence or absence of a radical initiator; (3) a method for reacting a polyphenylene ether with a modifying compound at a temperature lower than the glass transition temperature of the polyphenylene ether in a solution in the presence or absence of a radical initiator; and the like. Any of these methods may be used, but methods (1) and (2) are preferred.

Next, at least one modifying compound which has, in the molecular structure thereof, at least one carbon-carbon double bond or triple bond, and has at least one carboxylic acid group, acid anhydride group, amino group, hydroxyl group, or glycidyl group will be specifically described.

Examples of the modifying compound which has in the molecule thereof a carbon-carbon double bond and a carboxylic acid group and/or an acid anhydride group at the same time include maleic acid, fumaric acid, chloromaleic acid, cis-4-cyclohexene-1,2-dicarboxylic acid, and acid anhydrides thereof. Among these, fumaric acid, maleic acid and maleic anhydride are preferred, and fumaric acid and maleic anhydride are highly preferred.

Further, compounds, in which at least one or two carboxyl groups among carboxyl groups of these unsaturated dicarboxylic acids have been esterified, can also be used.

Examples of the modifying compound which has in the molecule thereof a carbon-carbon double bond and a glycidyl group at the same time include allylglycidyl ether, glycidyl acrylate, glycidyl methacrylate, and an epoxidized natural oil and fat.

Among these, glycidyl acrylate and glycidyl methacrylate are highly preferred.

Examples of the modifying compound which has in the molecule thereof a carbon-carbon double bond and a hydroxyl group at the same time include an unsaturated alcohol represented by the general formula: CₙH₂ₙ₋₃OH (wherein n is a positive integer) and an unsaturated alcohol represented by the general formula: CₙH₂ₙ₋₅OH or CₙH₂ₙ₋₇OH (wherein n is a positive integer), such as allyl alcohol, 4-pentene-1-ol and 1,4-pentadiene-3-ol.

The above-described modifying compounds may be used singly or in combination.

The amount of the modifying compound to be added on producing the modified polyphenylene ether is preferably from 0.1 to 10 parts by mass, more preferably from 0.3 to 5 parts by mass, based on 100 parts by mass of the polyphenylene ether.

Examples of the above-described radical initiator include known organic peroxides and diazo compounds, wherein specific examples include benzoyl peroxide, dicumyl peroxide, di-tert-butyl peroxide, tert-butyl cumyl peroxide, tert-butyl hydroperoxide, cumene hydroperoxide, and azobisisobutyronitrile.

The preferred amount of a radical initiator on producing a modified polyphenylene ether using a radical initiator is from 0.001 to 1 part by mass based on 100 parts by mass of the polyphenylene ether.

The percentage of the modifying compound added in the modified polyphenylene ether is preferably 0.01 to 5% by mass, more preferably 0.1 to 3% by mass.

An unreacted modifying compound and/or a polymer of the modifying compound may remain in the modified polyphenylene ether.

Further, various known stabilizers can suitably be employed in order to stabilize the polyphenylene ether. Examples of the stabilizers include metallic stabilizers such as zinc oxide and zinc sulfide, and organic stabilizers such as hindered phenol stabilizers, phosphoric ester stabilizers and hindered amine stabilizers. The amount of these stabilizers to be mixed is preferably less than 5 parts by mass based on 100 parts by mass of the polyphenylene ether.

In addition, known additives which can be added to the polyphenylene ether may also be added in an amount of less than 10 parts by mass based on 100 parts by mass of the polyphenylene ether.

The mixing ratio of the polyamide to the polyphenylene ether in the present invention is not particularly limited, but the ratio of polyamide-polyphenylene ether is preferably from 30/70 to 80/20, more preferably from 40/60 to 75/25, further preferably from 45/55 to 70/30.

The elastomer which can be used as a component (C) in the present invention is one or more selected from the group consisting of a block copolymer comprising at least one polymer block mainly composed of an aromatic vinyl compound and at least one polymer block mainly composed of a conjugated diene compound and a hydrogenated derivative thereof, an ethylene-α-olefin copolymer, a rubber-modified polystyrene (HIPS), and a styrene-rubber polymer-acrylonitrile copolymer (ABS resin).

In the present invention, the term "mainly composed of" in the polymer block mainly composed of an aromatic vinyl compound means that at least 50% by mass or more of the block is composed of an aromatic vinyl compound. More preferably 70% by mass or more, further preferably 80% by mass or more, and most preferably 90% by mass or more of the block is composed of an aromatic vinyl compound. Similarly, the term "mainly composed of" in the polymer block mainly composed of a conjugated diene compound means that at least 50% by mass or more of the block is composed of a conjugated diene compound. More preferably 70% by mass or more, further preferably 80% by mass or more, and most preferably 90% by mass or more of the block is composed of a conjugated diene compound.

Even in the case of a block in which, for example, a small amount of a conjugated diene or another compound is randomly coupled to an aromatic vinyl compound block, the block is also considered to be a block copolymer composed mainly of an aromatic vinyl compound if at least 50% by mass of the block is composed of an aromatic vinyl compound. This is also the same in the case of a conjugated diene compound block.

Specific examples of the aromatic vinyl compound include styrene, α-methylstyrene, and vinyl toluene. One or more selected from them can be used, and styrene is particularly preferred among others.

Specific examples of the conjugated diene compound include butadiene, isoprene, piperylene, and 1,3-pentadiene. One or more selected from them can be used, and butadiene, isoprene and a combination thereof are preferred among others.

In the microstructure of a conjugated diene compound-block part in the block copolymer, the 1,2-vinyl content or the sum of the 1,2-vinyl content and the 3,4-vinyl content is preferably in the range of from 5 to 80%, more preferably from 10 to 50%, and most preferably from 15 to 40%.

The block copolymer in the present invention is preferably a block copolymer in which a polymer block [A] mainly composed of an aromatic vinyl compound and a polymer block [B] mainly composed of a conjugated diene compound have a block sequence selected from an A-B type, an A-B-A type and an A-B-A-B type. The block copolymer may have a mixture of these types. Among others, the A-B type, the A-B-A type, and a mixture thereof are more preferred, and the A-B-A type is most preferred.

Further, the block copolymer of an aromatic vinyl compound and a conjugated diene compound which can be used in the present invention is more preferably a hydrogenated block copolymer. The term "hydrogenated block copolymer" refers to a block copolymer obtained by subjecting the above described block copolymer of an aromatic vinyl compound and a conjugated diene compound to hydrogenation treatment, thereby controlling the content of the aliphatic double bond in the polymer block mainly composed of a conjugated diene compound within a range of from more than 0% to 100%. The hydrogenated block copolymer preferably has a hydrogenation percentage of 80% or more, most preferably 98% or more.

As the block copolymer, a mixture of an unhydrogenated block copolymer with a hydrogenated block copolymer may also be used without any problem.

Moreover, the block copolymer of an aromatic vinyl compound/a conjugated diene compound may include, as long as it is not contrary to the spirit of the present invention, any combination of those different from the copolymer in terms of block sequence, the species of the aromatic vinyl compound, the species of the conjugated diene compound, the content of the 1,2-vinyl bond or the content of the 1,2-vinyl bond and the 3,4-vinyl bond, and the content of the aromatic vinyl compound component.

The block copolymer used in the present invention is desirably a mixture of a low molecular weight block copolymer and a high molecular weight block copolymer. Specifically, it is a mixture of a low molecular weight block copolymer having a number average molecular weight of less than 120,000 and a high molecular weight block copolymer having a number average molecular weight of 120,000 or more. More preferably, it is a mixture of a low molecular weight block copolymer having a number average molecular weight of less than 120,000 and a high molecular weight block copolymer having a number average molecular weight of 170,000 or more.

The mass ratio of the low molecular weight block copolymer to the high molecular weight block copolymer (low molecular weight block copolymer/high molecular weight block copolymer) is from 95/5 to 5/95, preferably from 90/10 to 10/90.

Moreover, in the present invention, the content of the polymer block mainly composed of an aromatic vinyl compound in the low molecular weight block copolymer is preferably in the range of 55% by mass or more and less than 90% by mass. The block copolymer containing the aromatic vinyl polymer block in the above range can be used more suitably as the low molecular weight block copolymer, because such a block copolymer can improve heat resistance.

Further, the low molecular weight block copolymer may be a mixture of a block copolymer containing the polymer block mainly composed of an aromatic vinyl compound in an amount of 55% by mass or more and less than 90% by mass and a block copolymer containing the polymer block mainly composed of an aromatic vinyl compound in an amount of 20% by mass or more and less than 55% by mass.

Furthermore, the block copolymer to be used in the present invention may be a totally modified block copolymer or a mixture of an unmodified block copolymer with a modified block copolymer.

As used herein the term "modified block copolymer" refers to a block copolymer which has been modified with at least one modifying compound which has in the molecular structure thereof at least one carbon-carbon double bond or triple bond, and has at least one carboxylic acid group, acid anhydride group, amino group, hydroxyl group, or glycidyl group.

A method for producing the modified block copolymer includes (1) a method for reacting a block copolymer with a modifying compound by melt-kneading at a temperature in the range of from the softening point of the block copolymer to 250°C in the presence or absence of a radical initiator; (2) a method for reacting a block copolymer with a modifying compound at a temperature of the softening temperature of the block copolymer or lower in a solution in the presence or absence of a radical initiator; (3) a method for reacting a block copolymer with a modifying compound at a temperature of the softening point of the block copolymer or lower without melting the block copolymer and the modifying compound in the presence or absence of a radical initiator; and the like. Any of these methods may be used, but the method (1) is preferred, and an embodiment of the method (1) wherein it is performed in the presence of a radical initiator is most preferred.

The same modifying compound as described in the modified polyphenylene ether can be used herein as the at least one modifying compound which has in the molecular structure thereof at least one carbon-carbon double bond or triple bond, and has at least one carboxylic acid group, acid anhydride group, amino group, hydroxyl group, or glycidyl group.

The amount of the elastomer to be mixed in the present invention is preferably less than 50 parts by mass based on 100 parts by mass of the sum of polyamide and polyphenylene ether.

Moreover, in the present invention, a known compatibilizer of polyamide and polyphenylene ether may be added.

It is the main purpose of using a compatibilizer to improve physical properties of a polyamide-polyphenylene ether mixture. The compatibilizer which can be used in the present invention is a polyfunctional compound which interacts with a polyphenylene ether, a polyamide, or the both of them. The interaction may be chemical (for example, grafting) or physical (for example, change in surface properties of a disperse phase).

In any case, the resulting polyamide-polyphenylene ether mixture shows improved compatibility.

Examples of the compatibilizers which can be used in the present invention are described in WO 01/81473. All of these known compatibilizers can be used singly or in combination.

Among these various compatibilizers, examples of particularly suitable compatibilizers include maleic acid, fumaric acid, and citric acid.

The content of the compatibilizer in the present invention is preferably from 0.01 to 10 parts by mass, more preferably from 0.1 to 5 parts by mass, most preferably from 0.1 to 1% by mass based on 100 parts by mass of a polyamide-polyphenylene ether mixture.

The phosphorus compound used as the component (D) in the present invention is one or more selected from a salt of a phosphorus compound selected from phosphoric acids, phosphorous acids, and hypophosphorous acids with a Group 1 metal of the Periodic Table.
The component (D) is preferably sodium hypophosphite (NaH₂PO₂) or a hydrate thereof (NaH₂PO₂·nH₂O).

The amount of the component (D) to be mixed in the present invention needs to be determined so that the resin composition contains 2 to 25 ppm of phosphorus element based on 100% by mass of the sum of the components (A) to (D). When the content of phosphorus element is less than 1 ppm, silver streaks or the like are liable to form during high-temperature molding. On the other hand, when the content of phosphorus element is higher than 35 ppm, the flowability is greatly varied due to the influence of water content. The content of phosphorus element is more preferably from 2 to 20 ppm.

The quantitative determination of phosphorus element in the resin composition can be conducted, for example, at a wavelength of 213.618 (nm) by an inductively coupled plasma (ICP) emission spectrometry using "IRIS/IP" manufactured by Thermo Jarrell Ash as an apparatus.

The method for mixing the component (D) of the present invention with a resin composition is not particularly limited. For example, the mixing method includes (1) a method in which the component (D) is preliminarily mixed with a polyamide-forming component before polymerization of a polyamide and then it is polymerized; (2) a method in which the component (D) is mixed with a polyamide in a molten state at any time point during polymerization of the polyamide; (3) a method in which the component (D) is mixed with a polyamide using an extruder or the like; and (4) a method in which the component (D) is mixed with polyamide and polyphenylene ether when they are melt-kneaded in an extruder. Among others, the component (D) is preferably mixed with a polyamide in advance before melt-kneading polyamide and polyphenylene ether. The methods (1) to (3) as described above, for example, can be used as a method for this purpose. Among these, a particularly preferred method is the method (1). A further preferred method is a method in which an aqueous solution of the component (D) is mixed with a polyamide-forming component before commencing polymerization. This can more remarkably achieve a subject of the present invention.

Further, in the present invention, the polyamide with which the component (D) is preliminarily included as described above is preferably a mixture of two or more polyamides having a different concentration of phosphorus element, more preferably a mixture of a polyamide containing 35 ppm or more of phosphorus element and a polyamide containing less than 35 ppm of phosphorus element, further preferably a mixture of a polyamide containing 35 ppm or more and 250 ppm or less of phosphorus element and a polyamide containing 0 ppm or more and less than 35 ppm of phosphorus element. This can more remarkably achieve a subject of the present invention.

In the present invention, a difference (ΔMFR) in MFR (as determined in accordance with ASTM D 1238, at 280°C, under a load of 5 kg) per 100 ppm of water content of the resin composition is preferably 0.80 g/10 min or less, more preferably 0.70 g/10 min or less, further preferably 0.65 g/10 min or less.

In the present invention, the resin composition preferably further comprises (E1) a base of a Group IA element of the Periodic Table selected from among oxide, carbonate, alkoxide, bicarbonate, and hydroxide and/or (E2) a polyvalent metal compound selected from among a carboxylate of one or more metals selected from among Group IIA elements, zinc, and aluminum, and a water-soluble compound of one or more metals selected from among Group IIA elements, zinc, and aluminum.

The base (E1) of a Group IA element of the Periodic Table of the present invention is preferably selected from among oxide, carbonate, alkoxide, bicarbonate, and hydroxide. The base (E1) of a Group IA element of the Periodic Table is more preferably selected from among sodium bicarbonate, potassium bicarbonate, potassium hydroxide, and sodium hydroxide, further preferably selected from among sodium bicarbonate and potassium bicarbonate.

The polyvalent metal compound (E2) of the present invention is preferably selected from among a carboxylate of one or more metals selected from among Group IIA elements, zinc, and aluminum, and a water-soluble compound of one or more metals selected from among Group IIA elements, zinc, and aluminum. The polyvalent metal compound (E2) is more preferably selected from among a carboxylate (acetate, propionate, benzoate, stearate, and the like) of one or more metals selected from among Group IIA elements, zinc, and aluminum, a halide of one or more metals selected from among Group IIA elements, zinc, and aluminum, and a nitrate of one or more metals selected from among Group IIA elements, zinc, and aluminum, further preferably selected from among calcium acetate and aluminum distearate.

In the present invention, the resin composition preferably contains the base of a Group IA element of the Periodic Table and/or the polyvalent metal compound in an amount of 0.10 to 50 moles, more preferably from 0.10 to 10 moles, further preferably from 0.10 to 3 moles, as the total concentration per 1,000,000 g of the resin composition.

In the resin composition of the present invention, the ratio of the sum of the number of moles of polyvalent metal and the number of moles of monovalent metal to the number of moles of phosphorus (P) element, that is, the value of (the number of moles of polyvalent metal + the number of moles of monovalent metal)/(the number of moles of P) is preferably more than 1 and 8 or less, more preferably from 2 to 7.5, most preferably from 2 to 7. By setting the concentration of each component in the above range, melt viscosity is stabilized and retention stability and coatability after heat exposure tend to be more improved, which are the objects of the present invention.

The addition method of a phosphorus compound (D) and a base (E1) of a Group IA element of the Periodic Table and/or a polyvalent metal compound (E2) used in the present invention includes a method in which the components are preliminarily added to a polyamide-forming component before polymerization of a polyamide; a method in which the components are added to a polyamide in a molten state at any time point during polymerization of the polyamide; a method in which the components are mixed with a polyamide using an extruder or the like; and a method in which the components are added to polyamide and polyphenylene ether when they are melt-kneaded in an extruder. These methods may be employed without any particular limitation, but the components are preferably preliminarily mixed with a polyamide before melt-kneading polyamide and polyphenylene ether. A particularly preferred method includes a method in which all of the phosphorus compound (D) and the base (E1) of a Group IA element of the Periodic Table and/or the polyvalent metal compound (E2) are preliminarily mixed with a polyamide-forming component before commencing polymerization; and a method in which the phosphorus compound (D) is preliminarily mixed with the polyamide-forming component before commencing polymerization and then the base (E1) of a Group IA element of the Periodic Table and/or the polyvalent metal compound (E2) is mixed with the polyamide in a molten state in the course of the polymerization process or after polymerization.

Further, the phosphorus compound (D) and the base (E1) of a Group IA element of the Periodic Table and/or the polyvalent metal compound (E2) to be preliminarily included in a polyamide may be added to the polyamide-forming component and polyamide in a molten state, in the form of a solid or an aqueous solution.

In the present invention, the resin composition preferably further comprises (F) a soluble metal aluminate represented by the general formula (M₂O)_{X}(Al₂O₃)_{Y} (wherein X + Y = 1, and M is a Group 1 metal of the Periodic Table).

A more preferred component (F) of the present invention is a sodium aluminate, wherein the main component of M in the above general formula is sodium.

The value of the molar ratio, Y/X, of aluminum (Al) to a Group 1 metal of the Periodic Table, M, in the above general formula is preferably 0.35 ≤ Y/X ≤ 1.25, more preferably 0.35 ≤ Y/X ≤ 1.00, further preferably 0.5 ≤ Y/X ≤ 0.90.

In the present invention, the molar ratio of Al metal to monovalent metal (the number of moles of Al metal/the number of moles of monovalent metal) in the resin composition is from 0.10 to 1.0, preferably from 0.25 to 0.9, more preferably from 0.30 to 0.75. By setting the concentration of each component in the above range, melt viscosity is stabilized and retention stability and coatability after heat exposure tend to be more improved, which are the objects of the present invention.

In the present invention, the resin composition preferably contains Al metal in an amount of 0.10 to 10 moles and monovalent metal in an amount of 0.10 to 10 moles, more preferably Al metal in an amount of 0.20 to 7.5 moles and monovalent metal in an amount of 0.20 to 7.5 moles, per 1,000,000 g of the resin composition.

In the resin composition of the present invention, the ratio of the sum of the number of moles of Al metal and the number of moles of monovalent metal to the number of moles of phosphorus (P) element, that is, the value of (the number of moles of Al metal + the number of moles of monovalent metal)/(the number of moles of P) is preferably more than 1 and 8 or less, more preferably from 2 to 7.5, most preferably from 3 to 7.5.

The addition method of a phosphorus compound (D) and a soluble metal aluminate (F) used in the present invention includes a method in which the component is preliminarily added to a polyamide-forming component before polymerization of a polyamide; a method in which the component is added to a polyamide in a molten state at any time point during polymerization of the polyamide; a method in which the component is mixed with a polyamide using an extruder or the like; and a method in which the component is added to polyamide and polyphenylene ether when they are melt-kneaded in an extruder. These methods may be employed without any particular limitation, but the component is preferably preliminarily mixed with a polyamide before melt-kneading polyamide and polyphenylene ether. A particularly preferred method includes a method in which both of the phosphorus compound (D) and the soluble metal aluminate (F) are preliminarily mixed with a polyamide-forming component before commencing polymerization; and a method in which the phosphorus compound (D) is preliminarily mixed with the polyamide-forming component before commencing polymerization and then the soluble metal aluminate (F) is mixed with the polyamide in a molten state in the course of the polymerization process or after polymerization.

A more preferred method is to mix a phosphorus compound (D) with a soluble metal aluminate (F) as an aqueous solution. In particular, the soluble aluminate (F) is more preferably added as an aqueous solution having a pH exceeding 9. When the soluble aluminate (F) is added as an aqueous solution, it tends to be more uniformly mixed with a polyamide-forming component, a polyamide during polymerization process, and a molten polyamide than when it is added as a powder. This can more remarkably achieve a subject of the present invention. In order to prepare the aqueous solution having a pH exceeding 9, a soluble aluminate may be directly dissolved in water, or an aqueous solution containing an alkali component, preferably an alkali component such as diamine or monoamine as a polyamide-forming component, may be prepared before the aluminate is dissolved.

Further, in the present invention, a known metal stabilizer as described in Japanese Patent Laid-Open No. 1-163262 may also be used without any problem for the purpose of improving heat stability of a polyamide resin.

The metal stabilizers which can particularly preferably be used include CuI, CuCl₂, copper acetate, and cerium stearate. A copper compound typified by CuI, copper acetate, or the like is more preferred. Further preferred is CuI. The amount of these copper compounds to be mixed into the resin composition is preferably from 1 to 100 ppm, more preferably from 1 to 30 ppm, further preferably from 1 to 10 ppm, in terms of copper element based on 100% by mass of the total amount of the resin composition.

The quantitative determination of copper element in the resin composition can be conducted in the same manner as in the quantitative determination of phosphorus element, for example, by inductively coupled plasma (ICP) emission spectrometry using "IRIS/IP" manufactured by Thermo Jarrell Ash as an apparatus.

Further, an alkyl metal halide compound typified by potassium iodide or potassium bromide can also be suitably used. It is preferred that a copper compound and an alkyl metal halide compound be added in combination.

Furthermore, the resin composition of the present invention may also comprise a styrenic polymer (G). The styrenic polymer as described in the present invention includes homopolystyrenes, rubber-modified polystyrenes (HIPS), styreneacrylonitrile copolymers (AS resin), and styrene-rubber polymer-acrylonitrile copolymers (ABS resin). By containing a styrenic polymer, a subject of the present invention is achieved and weatherability can be improved. The amount of the styrenic polymer to be mixed is preferably less than 50 parts by mass based on 100 parts by mass of the sum of polyamide and polyphenylene ether.

Further, in the present invention, an inorganic filler (H) may be added. Examples of the inorganic filler which can be used in the present invention include glass fiber, wollastonite, talc, kaolin, xonotlite, titanium oxide, potassium titanate, and zinc oxide. Among others, glass fiber, wollastonite, talc, clay, titanium oxide, and zinc oxide are preferred; and more preferred are glass fiber, wollastonite, talc, and titanium oxide.

The glass fiber which can be used in the present invention is not particularly limited and can be selected from among long fiber roving, short fiber chopped strands, and milled fiber. Among others, a glass fiber having an average fiber diameter of from 5 to 20 µm is preferred, and more preferred is a glass fiber having an average fiber diameter of from 8 to 17 µm.

The glass fiber may be surface-treated with a coupling agent (for example, a silane, titanate, aluminum-based, or zirconium-based coupling agent). In addition, the glass fiber may be coated with a binder, and an epoxy-based, a urethane-based, a urethane/maleic acid-modified, or a urethane/amine-modified compound can preferably be used as a binder. The surface treatment agent and the binder may be used in combination. The amount of the glass fiber to be mixed is preferably from 2 to 80 parts by mass, more preferably from 2 to 70 parts by mass, further preferably from 5 to 60 parts by mass based on 100 parts by mass of the sum of polyamide and polyphenylene ether.

The wollastonite which can be used in the present invention is a material obtained by purifying, pulverizing, and classifying a natural mineral composed of calcium silicate. Alternatively, a synthetic wollastonite may be used. Use is made of wollastonite particles preferably having an average particle size of from 2 to 9 µm and an aspect ratio of 5 or more, more preferably having an average particle size of from 3 to 7 µm and an aspect ratio of 5 or more, further preferably having an average particle size of from 3 to 7 µm and an aspect ratio of 8 or more and 30 or less.

Further, if desired, the wollastonite may be treated with a surface treatment agent. Examples of surface treatment agents include higher fatty acids and derivatives such as esters and salts thereof (such as stearic acid, oleic acid, palmitic acid, magnesium stearate, calcium stearate, aluminum stearate, stearic acid amide and ethyl stearate) and coupling agents (such as a silane coupling agent, a titanate coupling agent, an aluminum coupling agent and a zirconium coupling agent). The surface treatment agent is used in an amount of from 0.05 to 5% by mass based on the mass of wollastonite.

The amount of the wollastonite to be mixed is preferably from 2 to 80 parts by mass, more preferably from 2 to 70 parts by mass, further preferably from 5 to 60 parts by mass, based on 100 parts by mass of the sum of polyamide and polyphenylene ether.

The talc which can be used in the present invention is a material obtained by purifying, pulverizing, and classifying a natural mineral composed of magnesium silicate.

Further, if desired, the talc may be treated with a surface treatment agent. Examples of surface treatment agents include higher fatty acids and derivatives such as esters and salts thereof (such as stearic acid, oleic acid, palmitic acid, magnesium stearate, calcium stearate, aluminum stearate, stearic acid amide and ethyl stearate) and coupling agents (such as a silane coupling agent, a titanate coupling agent, an aluminum coupling agent and a zirconium coupling agent). The surface treatment agent is used in an amount of from 0.05 to 5% by mass based on the mass of talc.

The amount of the talc to be mixed is preferably from 2 to 80 parts by mass, more preferably from 2 to 70 parts by mass, further preferably from 5 to 60 parts by mass, based on 100 parts by mass of the sum of polyamide and polyphenylene ether.

Moreover, in the present invention, an electrically conductive carbon filler (I) may be added.

Specific examples of the electrically conductive carbon filler which can be used in the present invention include an electrically conductive carbon black, a carbon fibril (also referred to as a carbon nanotube), and carbon fiber.

The electrically conductive carbon black which can be used in the present invention preferably has a dibutyl phthalate (DBP) absorption of 250 ml/100 g or more, more preferably 300 ml/100 g or more, further preferably 350 ml/100 g or more. The DBP absorption as described herein is a value measured in accordance with a method defined in ASTM D 2414.

Further, the electrically conductive carbon black which can be used in the present invention preferably has a BET specific surface area (JIS K 6221-1982) of 200 m²/g or more, more preferably 400 m²/g or more. Examples of such electrically conductive carbon black which are commercially available include Ketjen black EC and Ketjen black EC-600JD, both available from Ketjen Black International Co., Ltd.

As the carbon fibril which can be used in the present invention, there can be mentioned a carbonaceous fiber having a hollow structure, only a small amount of branches and an average fiber diameter of less than 75 nm, such as those described in U.S. Pat. Nos. 4,663,230, 5,165,909, 5,171,560, 5,578,543, 5,589,152, 5,650,370, and 6,235,674. Further, the carbon fibril may be in the form of a coil having a coil pitch of 1 µm or less. As an example of commercially available carbon fibrils, there can be mentioned a carbon fibril (BN fibril) available from Hyperion Catalysis International, Incorporated.

The carbon fiber which can be used in the present invention includes polyacrylonitrile-based carbon fiber, rayon-based carbon fiber, lignin-based carbon fiber, and pitch-based carbon fiber. These may be used singly or in combination of two or more.

The amount of the electronically conductive carbon filler to be mixed in the present invention is preferably in the range of from 0.3 to 3% by mass, more preferably from 0.3 to 2% by mass, based on 100% by mass of the sum of polyamide and polyphenylene ether.

The method for adding the electrically conductive carbon filler includes, but is not limited to, a method for adding the filler to a molten mixture of polyamide and polyphenylene ether followed by melt-kneading and a method for adding the filler in the form of a masterbatch in which it is preblended with a polyamide. It is particularly preferred that the filler be added in the form of a masterbatch in which the filler is mixed with a polyamide.

When the filler is a carbon fibril, a polyamide 66/carbon fibril masterbatch (trade name: Polyamide 66 with Fibril TM Nanotubes RMB4620-00: the amount of carbon fibrils 20%) available from Hyperion Catalyst International, Incorporated can be used as a masterbatch.

With respect to the amount of the electrically conductive carbon filler in the masterbatch, the amount of the electrically conductive carbon filler is desirably from 5 to 25% by mass based on 100% by mass of the masterbatch.

Examples of the method for producing the masterbatch include production methods comprising using a twin-screw extruder having one feed port at the upstream side and one or more feed ports at the downstream side, wherein one production method comprises feeding a polyamide from the upstream side, adding an electrically conductive carbon filler from the downstream side and melt-kneading these components; and another production method comprises feeding part of a polyamide from the upstream side, adding remaining part of the polyamide and an electrically conductive carbon filler at the same time and melt-kneading these components.

The preset temperature of the processing machine for producing the masterbatch is not particularly limited, but preferably in the range of from 240 to 350°C, more preferably in the range of from 240 to 300°C, further preferably in the range of from 240 to 280°C.

In the present invention, additive components may be added as necessary in addition to the components as described above as long as they do not impair the effect of the present invention.

Examples of the additive components are mentioned below.

Examples of the additive components include known adhesion-improving agents to enhance affinity between an inorganic filler and a resin, flame retardants (halogenated resins, silicone flame retardants, magnesium hydroxide, aluminum hydroxide, organic phosphate ester compounds, ammonium polyphosphate or red phosphorus), fluoropolymers showing an antidripping effect, plasticizers (oils, low molecular weight polyolefins, polyethylene glycol or fatty esters), assistants to flame retardants such as antimony trioxide, antistatic agents, various peroxides, zinc sulfide, antioxidants, ultraviolet absorbers, and light stabilizers.

A specific processing machine to obtain the composition of the present invention includes, for instance, a single-screw extruder, a twin-screw extruder, a roll, a kneader, a Brabender Plastograph, and a Bambury mixer. Among others, a twin-screw extruder is preferred, and in particular, preferred is a twin-screw extruder having a screw diameter of 25 mm or more and an L/D of 30 or more, and most preferred is a twin-screw extruder having a screw diameter of 45 mm or more and an L/D of 30 or more, both having one upstream feed port and one or more downstream feed ports.

A temperature preset for the cylinder of the processing machine used here is not particularly limited, but any condition where a suitable composition can be obtained may be selected typically from the range of from 240 to 360°C.

The composition thus obtained according to the present invention can be molded into various molded parts by various conventionally known methods such as injection molding.

These various parts can be suitably used, for example, for electrical equipment parts of motorbikes and automobiles, such as relay block materials, electrical/electronic parts such as IC trays, chassis and cabinets of various disk players, OA parts and mechanical parts of various computers and peripheral parts thereof, exterior trim parts such as cowls of motorbikes, bumpers, fenders, door panels, various moldings, emblems, outer door handles, door mirror housings, wheel caps, roof rails and stays therefor, and spoilers of automobiles, interior trim parts such as instrument panels, console boxes and trims.

### Examples

Hereinafter, the present invention will be described further in detail by referring to Examples and Comparative Examples, but the present invention is by no means limited to those described in these Examples.

### (Materials used)

### (1) Polyamide 6,6 (hereinafter abbreviated as PA)

### (1-1) Polyamide 6,6 (hereinafter abbreviated as PA-1)

With a 50% by weight aqueous solution containing 1,600 kg of a polyamide 66-forming component (an equimolar salt of hexamethylenediamine and adipic acid) were blended 828 g of acetic acid and 828 g of hexamethylenediamine as endblocking agents. Furthermore, 394 g of a 10% by weight aqueous solution of sodium hypophosphite (NaH₂PO₂) and 55 g of a silicone defoaming agent were blended therewith to prepare a mixed solution. The mixed solution was charged into a concentration vessel, followed by mixing under a temperature condition of about 50°C and replacement with nitrogen. Then, the temperature of the mixed solution was elevated from about 50°C to about 150°C.

At this time, heating was continued to concentrate the mixed solution to about 80% while water was removed to outside of the system in order to maintain the pressure in the concentration vessel at about 0.05 to 0.15 MPa as a gauge pressure. The resulting concentrated solution was transferred to an autoclave and the temperature of the concentrated solution was elevated from 150°C to about 220°C to increase the pressure in the autoclave to about 1.77 MPa as a gauge pressure. Thereafter, the temperature was elevated from about 220°C to about 260°C and the heating was conducted while water was removed to outside of the system so as to maintain the pressure at about 1.77 MPa. Finally, the pressure was gradually lowered to atmospheric pressure while the temperature was elevated to about 280°C. The produced polymer in the strand form was discharged from a lower-part nozzle under pressurization of the autoclave with nitrogen and subjected to water-cooling and cutting to obtain pellets. The resulting pellets were dried in a nitrogen stream under a condition of 150°C for 60 minutes, obtaining a polyamide having the following viscosity number, phosphorus element concentration, and copper element concentration.
Viscosity number: 141 (as measured in 96% sulfuric acid according to ISO 307)
Phosphorus element: 10 ppm
Copper element: 0 ppm

### (1-2) Polyamide 6,6 (hereinafter abbreviated as PA-2)

This preparation was conducted in the same manner as in Example 1 except that the amount of the 10% by weight aqueous solution of sodium hypophosphite (NaH₂PO₂) to be blended was 2,957 g, thus obtaining a polyamide having the following properties.
Viscosity number: 141 (as measured in 96% sulfuric acid according to ISO 307)
Phosphorus element: 75 ppm
Copper element: 0 ppm

### (1-3) Polyamide 6,6 (hereinafter abbreviated as PA-3)

This preparation was conducted in the same manner as in Example 1, thus obtaining a polyamide having the following properties. However, the amount of the 10% by weight aqueous solution of sodium hypophosphite (NaH₂PO₂) to be blended was 5,914 g. Furthermore, copper iodide was added during polymerization so that the concentration of copper iodide in the polyamide was 270 ppm.
Viscosity number: 141 (as measured in 96% sulfuric acid according to ISO 307)
Phosphorus element: 150 ppm
Copper element: 90 ppm

### (1-4) Polyamide 6,6 (hereinafter abbreviated as PA-4)

This preparation was conducted in the same manner as in Example 1 except that the aqueous solution of sodium hypophosphite (NaH₂PO₂) was not blended, thus obtaining a polyamide having the following properties.
Viscosity number: 141 (as measured in 96% sulfuric acid according to ISO 307)
Phosphorus element: 0 ppm
Copper element: 0 ppm

### (1-5) Polyamide 6,6 (hereinafter abbreviated as PA-5)

With a 50% by weight aqueous solution containing 1,600 kg of a polyamide 66-forming component (an equimolar salt of hexamethylenediamine and adipic acid) were blended 828 g of acetic acid and 828 g of hexamethylenediamine as endblocking agents. Furthermore, 138 g of sodium hypophosphite, 345 g of potassium bicarbonate, and 55 g of a silicone-based defoaming agent were blended therewith to prepare a mixed solution. The mixed solution was charged into a concentration vessel, followed by mixing under a temperature condition of about 50°C and replacement with nitrogen. The operations thereafter were conducted in the same manner as in Example 1, thus obtaining a polyamide having the following properties.
Viscosity number: 141 (as measured in 96% sulfuric acid according to ISO 307)
Phosphorus element: 35 ppm
Copper element: 0 ppm

### (1-6) Polyamide 6,6 (hereinafter abbreviated as PA-6)

A 50% by weight aqueous solution containing a polyamide 66-forming component (an equimolar salt of hexamethylenediamine and adipic acid) was preheated from 40°C to 100°C. Then, the aqueous solution was injected into a concentration/reaction apparatus for continuous polymerization at a rate of about 3,000 kg/hr, and the aqueous solution was concentrated to about 90% at a temperature of from 200°C to 270°C while water was removed to outside of the system in order to maintain the pressure in the apparatus at about 0.1 to 0.5 MPa as a gauge pressure.

Then, the concentrate was discharged to a flasher and the pressure was gradually lowered to atmospheric pressure. It was transferred to a next polymerization vessel and maintained under conditions of a temperature of about 280°C and a pressure not higher than atmospheric pressure to be subjected to the polymerization step. Then, the produced polymer was extruded to form a strand, which was then cooled and cut into pellets, whereby a polyamide having the following properties was obtained. In the continuous polymerization, the aqueous solution of the polyamide-forming component was blended with an aqueous sodium hypophosphite solution, and the polyamide in the polymerization step was blended with calcium acetate. The amounts of sodium hypophosphite and calcium acetate to be blended were determined so as to be 100 ppm and 500 ppm, respectively.
Viscosity number: 141 (as measured in 96% sulfuric acid according to ISO 307)
Phosphorus element: 35 ppm
Copper element: 0 ppm

### (1-7) Polyamide 6,6 (hereinafter abbreviated as PA-7)

With a 50% by weight aqueous solution containing 1,600 kg of a polyamide 66-forming component (an equimolar salt of hexamethylenediamine and adipic acid) were blended 828 g of acetic acid and 828 g of hexamethylenediamine as endblocking agents. Furthermore, 726 g of a 38% by weight aqueous solution of sodium aluminate ((Na₂O)_{X}(Al₃O₂)_{Y} (wherein X + Y = 1 and Y/X = 0.59)), 1,380 g of a 10% by weight aqueous solution of sodium hypophosphite (NaH₂PO₂), and 55 g of a silicone-based defoaming agent were blended therewith to prepare a mixed solution. The mixed solution was charged into a concentration vessel, followed by mixing under a temperature condition of about 50°C and replacement with nitrogen. The operations thereafter were conducted in the same manner as in Example 1, thus obtaining a polyamide having the following properties.
Viscosity number: 141 (as measured in 96% sulfuric acid according to ISO 307)
Phosphorus element: 35 ppm
Copper element: 0 ppm

### (1-8) Polyamide 6,6 (hereinafter abbreviated as PA-8)

This preparation was conducted in the same manner as in (1-7) except that 726 g of the 38% by weight aqueous solution of sodium aluminate ((Na₂O)_{X}(Al₃O₂)_{Y} (wherein X + Y = 1 and Y/X = 0.59)) was replaced by 550 g of a powdery sodium aluminate ((Na₂O)_{X}(Al₂O₃)_{Y} (wherein X + Y = 1 and Y/X = 0.81)), thus obtaining a polyamide having the following properties.
Viscosity number: 141 (as measured in 96% sulfuric acid according to ISO 307)
Phosphorus element: 35 ppm
Copper element: 0 ppm

### (2) Polyphenylene ether (hereinafter abbreviated as PPE)

Poly(2,6-dimethyl-1,4-phenylene ether)
Reduced viscosity: 0.52 dl/g (0.5 g/dl, chloroform solution, measured at 30°C)

### (3) Elastomer

Polystyrene/hydrogenated polybutadiene/polystyrene block copolymer (hereinafter abbreviated as SEBS)
Trade name: Kraton G1651 (manufactured by Kraton Polymers Inc.)

### (4) Polystyrene (hereinafter abbreviated as GPPS)

Trade name: Polystyrene 685 (manufactured by PS Japan Corporation)

### (5) Inorganic filler

### (5-1) Glass fiber (hereinafter abbreviated as GF)

Trade name: CS-03-MA-FT2A (manufactured by Asahi Glass Fiber, Co., Ltd.)

### (6) Electrically conductive carbon filler

Trade name: Ketjen black EC-600JD (manufactured by Ketjen Black International Co., Ltd.) (hereinafter abbreviated as CB)

Using a twin-screw extruder having one feed port at the upstream side and one feed port at the downstream side and under a condition of a cylinder set temperature of 270°C, a polyamide 66 (PA-4) in an amount of 90 parts by mass was fed from the upstream feed port and melted. Then, an electrically conductive carbon filler in an amount of 10 parts by mass was added to the melt from the downstream feed port and melt-kneaded to prepare a master batch (hereinafter abbreviated as PA/CB-MB).

### (7) Maleic anhydride (hereinafter abbreviated as MAH)

Trade name: CRYSTALMAN-AB (manufactured by NOF Corporation)

### (Evaluation methods)

Evaluation methods will be described below.

### <Metal analysis>

The quantitative determination of phosphorus in compositions and polyamides was conducted at a wavelength of 213.618 (nm) by an inductively coupled plasma (ICP) emission spectrometry using "IRIS/IP" manufactured by Thermo Jarrell Ash as an apparatus. Other metal elements were also quantitatively determined at respective characteristic wavelengths similarly.

### <Adjustment of water content of pellets>

Pellets of resin compositions obtained in Examples and Comparative Examples were dried in a dryer under a nitrogen atmosphere at 80°C for 24 hours. The dried resin pellets were enclosed in an aluminum moisture-proof bag and left standing at 23°C for 24 hours. At this time, the water content of the resin pellets was found to be about 200 ppm. The pellets were left standing in a constant temperature and humidity chamber at 23°C and 50% RH for 20 minutes or 45 minutes, followed by being enclosed again in an aluminum moisture-proof bag and left standing at 23°C for 24 hours. At this time, the water content of the resin pellets was found to be about 500 ppm or about 1,200 ppm, respectively.

### <Melt flow rate (MFR)>

The pellets whose water content was adjusted were measured for MFR in accordance with ASTM D 1238, at 280°C, under a load of 5 kg.

### <ΔMFR>

ΔMFR was determined as a difference in MFR per 100 ppm of water content from the gradient of a straight line obtained by measuring the MFRs of at least 3 pellets from the resin composition having different water contents in the range of about 200 ppm to about 1,200 ppm, plotting the measured MFR values on a graph illustrating the relationship between MFR and water content, and approximating the plots by the least square method.

### <Silver streaks>

Pellets 2 (having a water content of about 500 ppm) were used to mold a flat-plate molded piece having a size of 90 × 50 × 2.5 mm by using a Toshiba IS-80EPN molding machine (set at a molten resin temperature of 280°C and a mold temperature of 80°C). Molding conditions were as follows: injection speed: 700 mm/sec, dwell pressure application: 40 MPa, the sum of injection time + holding time: 10 seconds, and cooling time: 15 seconds. The molding machine was suspended for 20 minutes after first 10 shots of molding. Then, molding was started again to mold flat-plate molded pieces. The flat-plate molded pieces from the first 5 shots were visually investigated, and the number of molded pieces on which silver streaks were observed was counted.

### <Coating adhesion test>

Pellets were molded by using an injection molding machine (FS80S: manufactured by Nissei Plastic Industrial Co., Ltd.) at a cylinder temperature of 305°C, a mold temperature of 80°C, and a mold filling time of 1 second, to thereby prepare a flat plate having a size of 10 cm × 10 cm (thickness: 2 mm) as a test piece.

The measurement of the coating adhesion was performed with respect to each of the flat plate after heat exposure at 204°C for 40 minutes. The flat plate was coated using an automated spray coating apparatus under a condition where the resultant coating had a thickness of 20 µm. As a coating, an acrylic urethane coating (OP-Z-NY, manufactured by Origin Electric Co., Ltd.) was used. After completion of the spray coating, the coated flat plate was baked at 150°C for 20 minutes.

After completion of the coating, the coated flat plate was allowed to stand still at 23°C and a humidity of 50% for 24 hours. An area having a size of 2 cm × 2 cm on the coated surface of the flat plate was cross-cut with a cutter knife to form a grid pattern composed of 100 square sections each having a size of 2 mm × 2 mm. Then, a coating film-peeling test was performed in which an adhesive tape was adhered to the grid pattern portion and quickly peeled off. The coating adhesion was evaluated by measuring the number of square sections among 100 sections which were left on the surface after the peeling test.

### Examples 1 to 12, Comparative Examples 1 to 3

Pellets of resin compositions were prepared by using a twin-screw extruder [ZSK-40: manufactured by Coperion Corporation (Germany)] having the upstream feed port on the first barrel from the upstream side of the extruder, the downstream feed port on the sixth barrel, and an L/D (the cylinder length of the extruder/the cylinder diameter of the extruder) of 44 (the number of barrels: 11) under the following operating conditions. The temperature from the upstream feed port to immediately before the downstream feed port was set at 320°C, and the temperature from the downstream feed port to the die was set at 280°C. The screw speed was 300 rpm, and the discharge was 60 kg/hr. PPE, SEBS, GPPS, and MAH were fed from the upstream feed port and melt-kneaded and then PA and NaH₂PO₂ were fed from the downstream feed port so that the proportion as described in Table 1 was obtained. The resulting resin compositions were adjusted for water content and then evaluated for MFR and silver streaks. Physical property values are shown in Tables 1 and 2 together with the composition.

### Examples 13 to 16, Comparative Example 4

Pellets of resin compositions were prepared by using a twin-screw extruder [ZSK-40: manufactured by Coperion Corporation (Germany)] having the upstream feed port on the first barrel from the upstream side of the extruder, the first downstream feed port on the sixth barrel, the second downstream feed port on the eighth barrel, and an L/D (the cylinder length of the extruder/the cylinder diameter of the extruder) of 44 (the number of barrels: 11) under the following operating conditions so that the proportion as described in Table 2 was obtained. The temperature from the upstream feed port to immediately before the first downstream feed port was set at 320°C, and the temperature from the first downstream feed port to the die was set at 280°C. The screw speed was 300 rpm, and the discharge was 60 kg/hr. PPE, SEBS, and MAH were fed from the upstream feed port and melt-kneaded and then PA and PA/CB-MB were fed from the first downstream feed port. In addition, GF was fed from the second downstream feed port. The resulting resin compositions were adjusted for water content and then evaluated for MFR and silver streaks. Furthermore, the resin composition mixed with an electrically conductive carbon filler was evaluated for coating adhesion after molding. Physical property values are shown in Tables 3 together with the composition.

**[Table 1]**

| Feed position of extruder | Component | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|---|
| | | | Resin composition | | | | | | | | | | | |
| Upstream feed port | PPE | Parts by weight | 40 | 40 | 40 | 40 | 40 | 40 | 40 | 40 | 40 | 40 | 40 | 35 |
| | MAH | | 0.3 | 0.3 | 0.3 | 0.3 | 0.3 | 0.3 | 0.3 | 0.3 | 0.3 | 0.3 | 0.3 | 0.3 |
| | SEBS | | 10 | 10 | 10 | 10 | 10 | 10 | 10 | 10 | 10 | 10 | 10 | 10 |
| | GPPS | | | | | | | | | | | | | 5 |
| Downstream feed port | PA-1 | | 40 | | 30 | | 20 | 20 | 50 | | | | | 40 |
| | PA-2 | | | | 20 | 7 | | 30 | | | | | | |
| | PA-3 | | 10 | 10 | | | | | | | | | | 10 |
| | PA-4 | | | 40 | | 43 | 30 | | | 50 | 10 | 10 | 10 | |
| | PA-5 | | | | | | | | | | 40 | | | |
| | PA-6 | | | | | | | | | | | 40 | | |
| | PA-7 | | | | | | | | | | | | 40 | |
| | NaH₂PO₂ | | | | | | | | | 0.005 | | | | |
| Phosphorus content based on 100% by mass of the sum of components (A) to (D) | | ppm | 19 | 15 | 18 | 5 | 2 | 25 | 5 | 18 | 14 | 14 | 14 | 20 |
| Copper content based on 100% by mass of the total amount of composition | | ppm | 9 | 9 | 0 | 0 | 0 | 0 | 0 | 0 | 0 | 0 | 0 | 9 |
| Type of polyvalent metal Content | | - mol/10⁶ g | - | - | - | - | - | - | - | - | - | Ca 1.26 | Al 0.76 | - |
| Type of monovalent metal Content | | - mol/10⁶ | Na 0.62 | Na 0.49 | Na 0.59 | Na 0.17 | Na 0.07 | Na 0.80 | Na 0.17 | Na 0.57 | Na, K 1.46 | Na 0.46 | Na 1.76 | Na 0.62 |
| (Y/X) of metal aluminate | | | - | - | - | - | - | - | - | - | - | - | 0.59 | - |
| Results of measurement | | | | | | | | | | | | | | |
| MFR of pellet 1 (water content: measured value) | | g/10 min (ppm) | 20 (190) | 20 (200) | 18 (190) | 21 (190) | 22 (190) | 19 (180) | 22 (200) | 21 (180) | 20 (210) | 20 (200) | 21 (210) | 23 (200) |
| MFR of pellet 2 (water content: measured value) | | g/10 min (ppm) | 22 (490) | 22 (510) | 20 (500) | 23 (510) | 23 (490) | 22 (520) | 24 (490) | 23 (480) | 21 (490) | 21 (480) | 22 (500) | 25 (490) |
| M.FR of pellet 3 (water content: measured value) | | g/10 min (ppm) | 24 (1190) | 25 (1210) | 23 (1230) | 27 (1190) | 28 (1250) | 27 (1250) | 29 (1190) | 28 (1220) | 23 (1170) | 23 (1190) | 24 (1220) | 28 (1210) |
| ΔMFR | | g/10 min | 0.38 | 0.49 | 0.49 | 0.59 | 0.62 | 0.78 | 0.70 | 0.70 | 0.30 | 0.30 | 0.30 | 0.50 |
| Silver streaks | | piece | 0/5 | | 0/5 | 0/5 | 1/5 | 0/5 | 0/5 | 1/5 | 0/5 | 0/5 | 0/5 | 0/5 |

**[Table 2]**

| Feed position of extruder | Component | Unit | Comp. Ex. 1 | Comp. Ex. 2 | Comp. Ex. 3 |
|---|---|---|---|---|---|
| | | | | | |
| Upstream feed port | PPE | Parts by weight | 40 | 40 | 40 |
| | MAH | | 0.3 | 0.3 | 0.3 |
| | SEBS | | 10 | 10 | 10 |
| | GPPS | | | | |
| Downstrea m feed port | PA-1 | | | | |
| | PA-2 | | | 50 | 40 |
| | PA-3 | | | | 10 |
| | PA-4 | | 50 | | |
| | PA-5 | | | | |
| | PA-6 | | | | |
| | PA-7 | | | | |
| | NaH₂PO₂ | | | | |
| Phosphorous content based on 100% by mass of the sum of components (A) to (D) | | ppm | 0 | 37 | 45 |
| Copper content based on 100% by mass of the total amount of composition | | ppm | 0 | 0 | 9 |
| Type of polyvalent metal Content | | - mol/10⁶ g | - | - | - |
| Type of monovalent metal Content | | - mol/10⁶ g | - | Na 1.22 | Na 1.47 |
| (Y/X) of metal aluminate | | | - | - | - |
| Results of measurement | | | | | |
| MFR of pellet 1 (water content: measured value) | | g/10 min (ppm) | 23 (210) | 12 (190) | 13 (200) |
| MFR of pellet 2 (water content: measured value) | | g/10 min | 24 (520) | 19 (520) | 19 (490) |
| MFR of pellet 3 (water content: measured value) | | g/10 min (ppm) | 31 (1170) | 29 (1200) | 27 (1200) |
| ΔMFR | | g/10min | 0.84 | 1.70 | 1.40 |
| Silver streaks | | piece | 4/5 | 0/5 | 0/5 |

**[Table 3]**

| Feed position of extruder | Component | Unit | Ex. 13 | Ex. 14 | Ex. 15 | Ex. 16 | Comp. Ex. 4 |
|---|---|---|---|---|---|---|---|
| | | | Resin composition | | | | |
| Upstream feed port | PPE | Parts by weight | 40 | 40 | 40 | 40 | 40 |
| | MAH | | 0.3 | 0.3 | 0.3 | 0.3 | 0.3 |
| | SEBS | | 10 | 10 | 10 | 10 | 10 |
| First downstream feed port | PA-1 | | 40 | | | | |
| | PA-3 | | 10 | 10 | 10 | 10 | |
| | PA-4 | | | | | | 30 |
| | PA-5 | | | 20 | | | |
| | PA-7 | | | | 20 | | |
| | PA-8 | | | | | 20 | |
| | PA/CB-MB | | | 20 | 20 | 20 | 20 |
| Second downstream feed port | GF | | 20 | | | | |
| Phosphorus content based on 100% by mass of the sum of components (A) to | | ppm | 19 | 22 | 22 | 22 | 0 |
| Copper content based on 100% by mass of the total amount of composition | | ppm | 7.5 | - 9 | 9 | 9 | 0 |
| Type of polyvalent metal Content | | mol/10⁶ g | - | - | Al 0.38 | Al 0.90 | - |
| - Type of monovalent metal Content | | mol/10⁶ g | Na 0.62 | Na, K 1.22 | Na 1.37 | Na 1.81 | - |
| (Y/X) of metal aluminate | | | - | | 0.59 | 0.81 | - |
| Results of measurement | | | | | | | |
| MFR of pellet 1 (water content: measured value) | | g/10 min (ppm) | 10 (190) | 15 (190) | 16 (200) | 16 (190) | 16 (210) |
| MFR of pellet 2 (water content: measured value) | | g/10 min (ppm) | 12 (500) | 16 (480) | 17 (510) | 17 (480) | 18 (510) |
| MFR of pellet 3 (water content: measured value) | | g/10 min (ppm) | 13 (1210) | 19 (1180) | 19 1210) | 19 (1200) | 24 (1240) |
| ΔMFR | | g/10 min | 0.27 | 0.41 | 0.30 | 0.30 | 0.81 |
| Silver streaks | | piece | 0/5 | 0/5 | 0/5 | 0/5 | 5/5 |
| Coating adhesion (after heat exposure) | | Number of square coating sections | - | 100/100 | 100/100 | 99/100 | 43/100 |

### Industrial Applicability

The present invention can provide a polyamide-polyphenylene ether alloy resin composition which shows only a small change in the melt flow rate over a wide range of water content and is excellent in retention stability in a molding machine, and can provide a molding composed of the resin composition. The resin composition can be used in a wide range of fields such as electrical/electronic parts, OA parts, vehicle parts and mechanical parts. In particular, the resin composition can be suitably used for exterior parts of automobiles or the like where large moldings are required.

## Claims

1. A resin composition, **characterized by** comprising (A) a polyamide, (B) a polyphenylene ether, (C) an elastomer, and (D) one or more phosphorus compounds selected from a salt of a phosphorus compound selected from among phosphoric acid, phosphorous acid, and hypophosphorous acid with a Group 1 metal of the Periodic Table, wherein the resin composition contains 2 to 25 ppm of phosphorus element based on 100% by mass of the sum of the components (A) to (D).

2. The resin composition according to claim 1, **characterized in that** the component (D) is preliminarily included in the component (A).

3. The resin composition according to claim 2, **characterized in that** the component (D) is added during polymerization of the component (A).

4. The resin composition according to any of claims 1 to 3, **characterized in that** the component (A) preliminarily includes the component (D) and is a mixture of two or more polyamides having different concentrations of phosphorus element.

5. The resin composition according to claim 4, **characterized in that** the component (A) is a mixture of (A-1) a polyamide containing 35 ppm or more and 250 ppm or less of phosphorus element and (A-2) a polyamide containing 0 ppm or more and less than 35 ppm of phosphorus element.

6. The resin composition according to any of claims 1 to 5, **characterized by** further comprising (E1) a base of a Group IA element of the Periodic Table selected from among oxide, carbonate, alkoxide, bicarbonate, and hydroxide and/or (E2) a polyvalent metal compound selected from among a carboxylate of one or more metals selected from among Group IIA elements, zinc, and aluminum, and a watersoluble compound of one or more metals selected from among Group IIA elements, zinc, and aluminum.

7. The resin composition according to claim 6, **characterized in that** the base (E1) of a Group IA element of the Periodic Table is at least one compound selected from among sodium bicarbonate, potassium bicarbonate, potassium hydroxide, and sodium hydroxide.

8. The resin composition according to claim 6, **characterized in that** the polyvalent metal compound (E2) is a compound selected from among a carboxylate of one or more metals selected from among Group IIA elements, zinc, and aluminum, a halide of one or more metals selected from among Group IIA elements, zinc, and aluminum, and a nitrate of one or more metals selected from among Group IIA elements, zinc, and aluminum.

9. The resin composition according to any of claims 6 to 8, **characterized by** comprising a phosphorus compound (D) and a base (E1) of a Group IA element of the Periodic Table and/or a polyvalent metal compound (E2), wherein the ratio of the sum of the number of moles of polyvalent metal and the number of moles of monovalent metal to the number of moles of phosphorus (P) element, that is, the value of (the number of moles of polyvalent metal + the number of moles of monovalent metal)/(the number of moles of P) is more than 1 and 8 or less.

10. The resin composition according to any of claims 6 to 9, **characterized in that** the component (D) and the component (E1) and/or the component (E2) are preliminarily added to the component (A) before being mixed with other components.

11. The resin composition according to any of claims 1 to 5, **characterized by** further comprising (F) a soluble metal aluminate represented by the general formula (M₂O)_{X}(Al₂O₃)_{Y} (wherein X + Y = 1, and M is a Group 1 metal of the Periodic Table).

12. The resin composition according to claim 11, **characterized in that** the soluble metal aluminate (F) is a sodium aluminate represented by the general formula (Na₂O)_{X}(Al₂O₃)_{Y} (wherein X + Y = 1 and 0.35 ≤ Y/X ≤ 1.25).

13. The resin composition according to claim 11 or 12, **characterized in that** the resin composition has a molar ratio of Al metal to monovalent metal (the number of moles of Al metal/the number of moles of monovalent metal) of 0.10 to 1.0.

14. The resin composition according to any of claims 11 to 13, **characterized in that** the component (D) and the component (F) are preliminarily added to the component (A) before being mixed with other components.

15. The resin composition according to any of claims 1 to 14, **characterized by** further comprising an alkali metal halide compound and/or a copper compound.

16. The resin composition according to claim 15, **characterized by** containing from 1 to 100 ppm of copper element based on 100% by mass of the total amount of the resin composition.

17. The resin composition according to any of claims 1 to 16, **characterized in that** the polyamide (A) is an aliphatic polyamide.

18. The resin composition according to any of claims 1 to 16, **characterized in that** the polyphenylene ether (B) is poly(2,6-dimethyl-1,4-phenylene ether) and/or a copolymer of 2,6-dimethyl-1,4-phenol and 2,3,6-trimethyl-1,4-phenol.

19. The resin composition according to any of claims 1 to 18, **characterized by** further comprising a styrenic polymer (G).

20. The resin composition according to any of claims 1 to 19, **characterized by** further comprising an inorganic filler (H).

21. The resin composition according to claim 20, **characterized in that** the inorganic filler (H) is one or more selected from among glass fiber, talc, clay, wollastonite, and titanium oxide.

22. The resin composition according to any of claims 1 to 21, **characterized in that** the elastomer (C) is a hydrogenated derivative of a block copolymer comprising a polymer block composed mainly of an aromatic vinyl compound and a polymer block composed mainly of a conjugated diene compound.

23. The resin composition according to any of claims 1 to 22, **characterized by** further comprising an electrically conductive carbon filler (I), wherein the electrically conductive carbon filler is one or more selected from among carbon fibrils and carbon black.

24. An injection molding of the resin composition according to any of claims 1 to 23.

## Patentansprüche

1. Harzzusammensetzung, die **dadurch gekennzeichnet ist, dass** sie (A) ein Polyamid, (B) einen Polyphenylenether, (C) ein Elastomer und (D) eine oder mehrere Phosphorverbindungen umfasst, die unter einem Salz einer unter Phosphorsäure, phosphoriger Säure und hypophosphoriger Säure ausgewählten Phosphorverbindung mit einem Metall der Gruppe I des Periodensystems ausgewählt ist, wobei die Harzzusammensetzung 2 bis 25 ppm an Phosphorelement, bezogen auf 100 Massen-% der Summe der Komponenten (A) bis (D), enthält.

2. Harzzusammensetzung nach Anspruch 1, **dadurch gekennzeichnet, dass** die Komponente (D) vorher in die Komponente (A) gegeben wurde.

3. Harzzusammensetzung nach Anspruch 2, **dadurch gekennzeichnet, dass** die Komponente (D) während der Polymerisation der Komponente (A) zugegeben wird.

4. Harzzusammensetzung nach einem der Ansprüche 1 bis 3, **dadurch gekennzeichnet, dass** die Komponente (A) vorher die Komponente (D) umfasst und ein Gemisch von zwei oder mehr Polyamiden mit unterschiedlichen Konzentrationen an Phosphorelement ist.

5. Harzzusammensetzung nach Anspruch 4, **dadurch gekennzeichnet, dass** die Komponente (A) ein Gemisch von (A-1) einem Polyamid, das 35 ppm oder mehr und 250 ppm oder weniger an Phosphorelement und (A-2) einem Polyamid ist, das 0 ppm oder mehr und weniger als 35 ppm an Phosphorelement enthält.

6. Harzzusammensetzung nach einem der Ansprüche 1 bis 5, **dadurch gekennzeichnet, dass** sie außerdem (E1) eine unter einem Oxid, Carbonat, Alkoxid, Bicarbonat und Hydroxid ausgewählte Base eines Elements der Gruppe IA des Periodensystems und/oder (E2) eine unter einem Carboxylat von einem oder mehreren Metallen, ausgewählt unter Elementen der Gruppe IIA, Zink und Aluminium, ausgewählt mehrwertige Metallverbindung und eine wasserlösliche Verbindung eines oder mehrerer unter Elementen der Gruppen IIA, Zink und Aluminium ausgewählten Metalle umfasst.

7. Harzzusammensetzung nach Anspruch 6, **dadurch gekennzeichnet, dass** die Base (E1) eines Elements der Gruppe IA des Periodensystems mindestens eine unter Natriumbicarbonat, Kaliumbicarbonat, Kaliumhydroxid und Natriumhydroxid ausgewählte Verbindung ist.

8. Harzzusammensetzung nach Anspruch 6, **dadurch gekennzeichnet, dass** die mehrwertige Metallverbindung (E2) eine Verbindung ist, die ausgewählt ist unter einem Carboxylat von einem oder mehreren unter Elementen der Gruppe IIA, Zink und Aluminium ausgewählten Metallen, einem Halogenid von einem oder mehreren unter Elementen der Gruppe IIA, Zink und Aluminium ausgewählten Metallen und einem Nitrat von einem oder mehreren unter Elementen der Gruppe IIA, Zink und Aluminium ausgewählten Metallen.

9. Harzzusammensetzung nach einem der Ansprüche 6 bis 8, **dadurch gekennzeichnet, dass** sie eine Phosphorverbindung (D) und eine Base (E1) eines Elements der Gruppe IA des Periodensystems und/oder eine mehrwertige Metallverbindung (E2) umfasst, wobei das Verhältnis der Summe der Anzahl der Mole des mehrwertigen Metalls und der Anzahl der Mole des einwertigen Metalls zu der Anzahl der Mole des Phosphorelements (P), d.h. der Wert (Anzahl der Mole des mehrwertigen Metalls + Anzahl der Mole des einwertigen Metalls)/Anzahl der Mole von P) mehr als 1 und 8 oder weniger ist.

10. Harzzusammensetzung nach einem der Ansprüche 6 bis 9, **dadurch gekennzeichnet, dass** die Komponente (D) und die Komponente (E1) und/oder die Komponente (E2) vorbereitend zu der Komponente (A) gegeben werden, bevor sie mit anderen Komponenten gemischt werden.

11. Harzzusammensetzung nach einem der Ansprüche 1 bis 5, **dadurch gekennzeichnet, dass** sie außerdem (F) ein lösliches Metallaluminat der allgemeinen Formel (M₂O)_{X}(Al₂O₃)_{Y} (worin X + Y = 1, und M ein Metall der Gruppe I des Periodensystems ist) enthält.

12. Harzzusammensetzung nach Anspruch 11, **dadurch gekennzeichnet, dass** das lösliche Metallaluminat (F) ein Natriumaluminat der allgemeinen Formel (Na₂O)_{X}(Al₂O₃)_{Y} (worin X + Y = 1 und 0,35 ≤ Y/X ≤ 1,25) ist.

13. Harzzusammensetzung nach Anspruch 11 oder 12, **dadurch gekennzeichnet, dass** die Harzzusammensetzung ein Molverhältnis des Al-Metalls zu dem einwertigen Metall (Anzahl der Mole von Al-Metall/Anzahl der Mole des einwertigen Metalls) von 0,10 bis 1,0 aufweist.

14. Harzzusammensetzung nach einem der Ansprüche 11 bis 13, **dadurch gekennzeichnet, dass** die Komponente (D) und die Komponente (F) vorbereitend zu der Komponente (A) gegeben werden, bevor sie mit anderen Komponenten vermischt werden.

15. Harzzusammensetzung nach einem der Ansprüche 1 bis 14, **dadurch gekennzeichnet, dass** sie außerdem eine Alkalimetallhalogenidverbindung und/oder eine Kupferverbindung umfasst.

16. Harzzusammensetzung nach Anspruch 15, **dadurch gekennzeichnet, dass** sie 1 bis 100 ppm des Elements Kupfer, bezogen auf 100 Massen-% der Gesamtmenge der Harzzusammensetzung, enthält.

17. Harzzusammensetzung nach einem der Ansprüche 1 bis 16, **dadurch gekennzeichnet, dass** das Polyamid (A) ein aliphatisches Polyamid ist.

18. Harzzusammensetzung nach einem der Ansprüche 1 bis 16, **dadurch gekennzeichnet, dass** der Polyphenylenether (B) Poly(2,6-dimethyl-1,4-phenylenether) und/oder ein Copolymer von 2,6-Dimethyl-1,4-phenol und 2,3,6-Trimethyl-1,4-phenol ist.

19. Harzzusammensetzung nach einem der Ansprüche 1 bis 18, **dadurch gekennzeichnet, dass** sie außerdem ein Styrolpolymer (B) umfasst.

20. Harzzusammensetzung nach einem der Ansprüche 1 bis 19, **dadurch gekennzeichnet, dass** sie außerdem ein anorganisches Füllmittel (H) umfasst.

21. Harzzusammensetzung nach Anspruch 20, **dadurch gekennzeichnet, dass** das anorganische Füllmittel (H) ein oder mehrere Füllmittel ist, die unter Glasfaser, Talk, Ton, Wollastonit und Titanoxid ausgewählt sind.

22. Harzzusammensetzung nach einem der Ansprüche 1 bis 21, **dadurch gekennzeichnet, dass** das Elastomer (C) ein hydriertes Derivat eines Blockcopolymers ist, das einen Polymerblock, hauptsächlich zusammengesetzt aus einer aromatischen Vinylverbindung, und einen Polymerblock, hauptsächlich zusammengesetzt aus einer konjugierten Dienverbindung, enthält.

23. Harzzusammensetzung nach einem der Ansprüche 1 bis 22, **dadurch gekennzeichnet, dass** sie außerdem einen elektrisch leitenden Kohlenstofffüllstoff (I) umfasst, wobei der elektrisch leitende Kohlenstofffüllstoff einer oder mehrere ist, die unter Kohlenstofffasern und Ruß ausgewählt sind.

24. Spritzgussgegenstand der Harzzusammensetzung nach einem der Ansprüche 1 bis 23.

## Revendications

1. Composition de résine, **caractérisée en ce qu'**elle comprend (A) un polyamide, (B) un polyphénylène éther, (C) un élastomère, et (D) un ou plusieurs composés de phosphore choisis parmi un sel d'un composé de phosphore choisi parmi l'acide phosphorique, l'acide phosphoreux, et l'acide hypophosphoreux avec un métal du groupe 1 de la classification périodique des éléments, dans laquelle la composition de résine contient de 2 à 25 ppm d'élément phosphore rapporté à 100 % en masse de la somme des constituants (A) à (D).

2. Composition de résine selon la revendication 1, **caractérisée en ce que** le constituant (D) est préliminairement inclus dans le constituant (A).

3. Composition de résine selon la revendication 2, **caractérisée en ce que** le constituant (D) est ajouté pendant la polymérisation du constituant (A).

4. Composition de résine selon l'une quelconque des revendications 1 à 3, **caractérisée en ce que** le constituant (A) comprend de manière préliminaire le constituant (D) et est un mélange de deux ou plusieurs polyamides présentant des concentrations différentes en élément phosphore.

5. Composition de résine selon la revendication 4, **caractérisée en ce que** le constituant (A) est un mélange de (A-1) un polyamide contenant 35 ppm ou plus et 250 ppm ou moins d'élément phosphore et de (A-2) un polyamide contenant 0 ppm ou plus et moins de 35 ppm d'élément phosphore.

6. Composition de résine selon l'une quelconque des revendications 1 à 5, **caractérisée en ce qu'**elle comprend de plus (E1) une base d'un élément du groupe IA de la classification périodique des éléments choisie parmi un oxyde, un carbonate, un alcoxyde, un bicarbonate, et un hydroxyde et/ou (E2) un composé de métal polyvalent choisi parmi un carboxylate d'un ou plusieurs métaux choisis parmi des éléments du groupe IIA, le zinc, et l'aluminium, et un composé soluble dans l'eau d'un ou plusieurs métaux choisis parmi des éléments du groupe IIA, le zinc, et l'aluminium.

7. Composition de résine selon la revendication 6, **caractérisée en ce que** la base (E1) d'un élément du groupe IA de la classification périodique des éléments est au moins un composé choisi parmi le bicarbonate de sodium, le bicarbonate de potassium, l'hydroxyde de potassium, et l'hydroxyde de sodium.

8. Composition de résine selon la revendication 6, **caractérisée en ce que** le composé de métal polyvalent (E2) est un composé choisi parmi un carboxylate d'un ou plusieurs métaux choisis parmi des éléments du groupe IIA, le zinc, et l'aluminium, un halogénure d'un ou plusieurs métaux choisis parmi des éléments du groupe IIA, le zinc, et l'aluminium, et un nitrate d'un ou plusieurs métaux choisis parmi des éléments du groupe IIA, le zinc, et l'aluminium.

9. Composition de résine selon l'une quelconque des revendications 6 à 8, **caractérisée en ce qu'**elle comprend un composé de phosphore (D) et une base (E1) d'un élément du groupe IA de la classification périodique des éléments et/ou un composé de métal polyvalent (E2), dans laquelle le rapport de la somme du nombre de moles de métal polyvalent et du nombre de moles de métal monovalent au nombre de moles de l'élément phosphore (P), c'est-à-dire la valeur de (le nombre de moles de métal polyvalent + le nombre de moles de métal monovalent)/(le nombre de moles de P) est supérieure à 1 et de 8 ou inférieure.

10. Composition de résine selon l'une quelconque des revendications 6 à 9, **caractérisée en ce que** le constituant (D) et le constituant (E1) et/ou le constituant (E2) sont ajoutés de manière préliminaire au constituant (A) avant d'être mélangés avec d'autres constituants.

11. Composition de résine selon l'une quelconque des revendications 1 à 5, **caractérisée en ce qu'**elle comprend de plus (F) un aluminate de métal soluble représenté par la formule générale (M₂O)_{X}(Al₂O₃)_{Y} (où X + Y = 1, et M est un métal du groupe 1 de la classification périodique des éléments).

12. Composition de résine selon la revendication 11, **caractérisée en ce que** l'aluminate de métal soluble (F) est un aluminate de sodium représenté par la formule générale (Na₂O)_{X}(Al₂O₃)_{Y} (où X + Y = 1 et 0,35 ≤ Y/X ≤ 1,25).

13. Composition de résine selon la revendication 11 ou 12, **caractérisée en ce que** la composition de résine présente un rapport molaire de métal d'Al au métal monovalent (le nombre de moles de métal d'Al/le nombre de moles de métal monovalent) de 0,10 à 1,0.

14. Composition de résine selon l'une quelconque des revendications 11 à 13, **caractérisée en ce que** le constituant (D) et le constituant (F) sont ajoutés de manière préliminaire au constituant (A) avant d'être mélangés avec d'autres constituants.

15. Composition de résine selon l'une quelconque des revendications 1 à 14, **caractérisée en ce qu'**elle comprend de plus un composé d'halogénure de métal alcalin et/ou un composé de cuivre.

16. Composition de résine selon la revendication 15, **caractérisée en ce qu'**elle contient de 1 à 100 ppm d'élément de cuivre rapporté à 100 % en masse de la quantité totale de la composition de résine.

17. Composition de résine selon l'une quelconque des revendications 1 à 16, **caractérisée en ce que** le polyamide (A) est un polyamide aliphatique.

18. Composition de résine selon l'une quelconque des revendications 1 à 16, **caractérisée en ce que** le polyphénylène éther (B) est le poly(2,6-diméthyl-1,4-phénylène éther) et/ou un copolymère de 2,6-diméthyl-1,4-phénol et de 2,3,6-triméthyl-1,4-phénol.

19. Composition de résine selon l'une quelconque des revendications 1 à 18, **caractérisée en ce qu'**elle comprend de plus un polymère styrénique (G).

20. Composition de résine selon l'une quelconque des revendications 1 à 19, **caractérisée en ce qu'**elle comprend de plus une charge inorganique (H).

21. Composition de résine selon la revendication 20, **caractérisée en ce que** la charge inorganique (H) est une ou plusieurs choisie parmi une fibre de verre, la stéatite, l'argile, la wollastonite, et l'oxyde de titane.

22. Composition de résine selon l'une quelconque des revendications 1 à 21, **caractérisée en ce que** l'élastomère (C) est un dérivé hydrogéné d'un copolymère séquencé comprenant une séquence polymère principalement constituée d'un composé vinylique aromatique et une séquence polymère principalement constituée d'un composé de diène conjugué.

23. Composition de résine selon l'une quelconque des revendications 1 à 22, **caractérisée en ce qu'**elle comprend de plus une charge de carbone électroconducteur (I), dans laquelle la charge de carbone électroconducteur est une ou plusieurs choisie parmi des fibrilles de carbone et du noir de carbone.

24. Moulage par injection de la composition de résine selon l'une quelconque des revendications 1 à 23.
